## Europäisches Patentamt
## European Patent Office
## Office européen des brevets

(11) Veröffentlichungsnummer: **0 219 766**
**B1**

(12) **EUROPÄISCHE PATENTSCHRIFT**

(45) Veröffentlichungstag der Patentschrift:
28.02.90

(51) Int. Cl.⁴: **B01D 11/04**, B01D 53/18

(21) Anmeldenummer: 86113939.2

(22) Anmeldetag: 08.10.86

(54) Verfahren zur Flüssig-Flüssig-Extraktion unter Verwendung von Stoffaustausch-Kolonnen.

(30) Priorität: 19.10.85 DE 8529714 U

(43) Veröffentlichungstag der Anmeldung:
29.04.87 Patentblatt 87/18

(45) Bekanntmachung des Hinweises auf die Patenterteilung:
28.02.90 Patentblatt 90/9

(84) Benannte Vertragsstaaten:
AT BE CH DE ES FR GB IT LI NL SE

(56) Entgegenhaltungen:
EP-A- 0 151 693
DE-C- 624 276
FR-A- 1 584 789
GB-A- 929 030
US-A- 4 369 150

(73) Patentinhaber: BAYER AG,
D-5090 Leverkusen 1 Bayerwerk(DE)

(72) Erfinder: Brandt, Hans-Walter, Dr., Hahnenberg 64,
D-5068 Odenthal(DE)
Erfinder: Steffens, Friedhelm, Espenweg 12,
D-5090 Leverkusen 1(DE)
Erfinder: Schäfer, Johannes-Peter, Dipl.-Ing.,
Wipperfürther-Strasse 368a, D-5067 Kürten(DE)
Erfinder: Schröter, Jürgen, Rückertstrasse 4,
D-5090 Leverkusen 1(DE)

## Beschreibung

Die Erfindung geht aus von einem Verfahren zur Flüssig-Flüssig-Extraktion unter Verwendung einer Stoffaustausch-Kolonne mit einer geordneten Packung auf der Basis einer Vielzahl parallel zur Kolonnenachse geschichteter, sich untereinander punktweise berührender Lagen, die im Gegenstrom von jeweils mindestens einer kontinuierlichen und einer dispersen Phase durchströmt werden.

Ein Verfahren dieser Art ist in EP 151 693 beschrieben. Die beiden kennzeichnenden Größen für die Leistungsfähigkeit einer Extraktionskolonne sind der zulässige Betriebsbereich mit dem Grenzfall der Flutgrenze sowie die darin erzielbare Trennleistung. Grundsätzlich wird eine hohe Trennwirksamkeit bei einem großen flächenspezifischen Durchsatz angestrebt. Beide Größen sind aber normalerweise stark voneinander abhängig, so daß optimale Werte nur in einem relativ schmalen Bereich erzielt werden können. Dies bedeutet in der Praxis eine starke Einschränkung hinsichtlich der Auslegung von Extraktionskolonnen und hat in der Vergangenheit wohl mit dazu beigetragen, daß die Einsatzmöglichkeiten der Flüssig-Flüssig-Extraktion in der chemischen Industrie bisher nur in einem geringen Umfang ausgeschöpft wurden.

Hier setzt die Erfindung an. Ausgehend von dem eingangs beschriebenen Verfahren lag die Aufgabe zugrunde, bei einem hohen flächenbezogenen Durchsatz über einen relativ großen Belastungsspielraum der Kolonne eine annähernd gleichbleibende hohe Trennwirksamkeit zu erzielen.

Diese Aufgabe wird erfindungsgemäß dadurch gelöst, daß in der Stoffaustausch-Kolonne eine geordnete Packung verwendet wird, deren Lagen eine spezifische Oberfläche von mindestens 300 m²/m³ Packungsvolumen, vorzugsweise 500 m²/m³, aufweisen und die beiden Phasenströme (kontinuierlich und dispers) durch eine zwischen Kolonneninnenwand und Packung angeordnete O-ringförmige Randabdichtung in regelmäßigen Abständen in die Packung zurückgeführt werden. Dabei besteht die Randabdichtung aus einem von der dispersen Phase nicht benetzbaren, elastischen, um die Packung gelegten Schlauch oder Rohr.

Ein verbesserter Trenneffekt kann erreicht werden, wenn den beiden Phasenströmen durch einen am unteren Ende der Kolonne angebrachten Pulsator eine pulsierende Bewegung überlagert wird.

Die Quervermischung der beiden Phasen wird verbessert, wenn die Packungen übereinander jeweils um 90° gegeneinander versetzt in der Kolonne angeordnet werden.

Als Elemente für die Packung beziehungsweise die Lagen werden vorteilhaft geriffelte und gelochte Bleche verwendet, wobei die Riffelungen benachbarter Lagen sich kreuzen.

Im Falle einer organischen dispersen Phase wird zur Randabdichtung vorzugsweise ein elastischer Metallschlauch und im Falle einer wässrigen dispersen Phase ein elastischer Kunststoffschlauch verwendet.

Der Vorteil des erfindungsgemäßen Verfahrens liegt in dem großen Belastungsspielraum hinsichtlich des Durchsatzes der beiden Phasen bei annähernd konstanter sehr guter Trennwirksamkeit. Daraus resultiert in der Praxis eine hohe Flexibilität hinsichtlich der Auslegung und der Anwendungen des Verfahrens.

Im folgenden wird die Erfindung anhand von Ausführungsbeispielen und Zeichnungen beschrieben. Es zeigen:

Fig. 1 eine Extraktionskolonne mit einer Packung aus geriffelten Blechen und

Fig. 2 eine Extraktionskolonne mit einer Packung aus gewendelten Streifen.

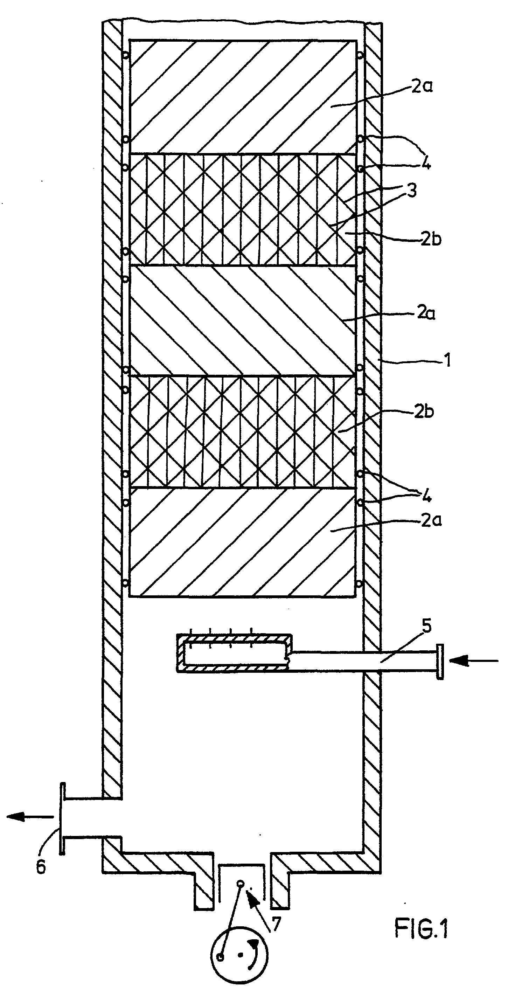

Die Kolonne nach Figur 1 besteht aus dem Kolonnenmantel 1 mit den darin befindlichen, praktisch den gesamten Kolonnenquerschnitt ausfüllenden, geordneten Packungen 2a und 2b. Die Packungen 2a und 2b sind jeweils um 90° gegeneinander versetzt; d. h. um 90° (Längsachse!) gegeneinander verdreht. Dadurch wird eine gute Quervermischung erzielt. Die Packung 2a beziehungsweise 2b wird durch parallel zur Kolonnenachse geschichtete Lagen 3 aus flächenförmigem, geknicktem oder gewelltem Material gebildet. Die Oberfläche kann dabei glatt oder geriffelt, und vorzugsweise gelocht sein.

Als Material für die Einbauelemente 3 (Lagen) dient Blech, Kunststoff, Keramik oder Glas, bevorzugt jedoch Edelstahlblech mit einer Wandstärke von ca. 0,3 mm. Wichtig ist dabei, daß die Oberfläche von der dispersen Phase nicht benetzt wird, so daß der Tropfenaufstieg beziehungsweise -fall durch die vorhandenen Kanäle und Löcher zwischen den Lagen ungehindert erfolgen kann. Die spezifische Oberfläche der Packung soll mindestens 300 m²/m³ Packungsvolumen, vorzugsweise 500 m²/m³ betragen. Die Knickhöhe der Einbauelemente beträgt vorzugsweise ca. 12 mm, der Knickwinkel mehr als 80°, die Lagenhöhe ca. 7 mm und die Steigung in den Lagen mindestens 45°. Bei gewellter Ausführung reduziert sich die Lagenhöhe auf ca. 5 mm, während die Knickhöhe von 12 mm im mäanderförmig gewellten Blech bestehen bleibt. Die Lagen 3 berühren sich gegenseitig punktförmig, wobei die die Strömungskanäle bildende Riffelung eine wellenförmige oder zick-zack-förmige Kontur aufweisen kann. Eine Packung dieser Art ist z. B. die Mellapak 500 Y der Firma Sulzer AG, die in Destillations- und Rektifikationskolonnen vielfach eingesetzt wird.

Zwischen der Packung 2a, 2b und dem Kolonnenmantel 1 sind aus einem elastischen Schlauch bestehende Randabdichtungen 4 eingelegt. Das Material, aus dem der Schlauch besteht, wird so gewählt, daß die disperse Phase die Randabdichtung 4 nicht benetzt. Im Falle einer organischen dispersen Phase wird daher ein Metallschlauch, im Falle einer wässrigen dispersen Phase ein Kunststoffschlauch, z. B. aus Teflon oder Polyethylen, zur Randabdichtung verwendet.

Der Querschnitt des Schlauches kann auch quadratisch oder in Form einer segmentförmigen Dichtungslippe gestaltet sein. Die Randabdichtungen sind, wie in Figur 1 gezeigt, in regelmäßigen Abständen angeordnet. Durch den O-ringförmig um die Packung gelegten elastischen Schlauch ist eine einwandfreie Rückführung der zwischen Packung 2a beziehungsweise 2b und Kolonnenwand 1 strömenden dispersen und kontinierlichen Phase in die Packung gewährleistet, so daß die im Gegenstrom fließenden Phasen vollständig am Stoffaustausch teilnehmen. Die Randabdichtung führt damit zu einer wesentlich verbesserten Strömungsführung an der Peripherie der Packung. Auf diese Weise konnte die Trennwirksamkeit der Kolonne bei praktisch gleichbleibender Querschnittsbelastung wesentlich verbessert werden.

Am unteren Ende der Kolonne befindet sich der Zulauf 5 für die leichte Phase und am Kolonnenboden der Ablauf 6 für die schwere Phase. Zugeführt wird die schwere Phase am oberen Ende der Kolonne. Die Abnahme der leichten Phase erfolgt per freiem Überlauf. Am Boden der Kolonne ist ferner ein Pulsationskolben (7) angeordnet, der sowohl über Schubstange und Exzenter, aber auch pneumatisch oder hydraulisch angetrieben werden kann. Durch Heben oder Senken des Pulsationskolbens (7) wird der gesamte flüssige Kolonneninhalt in Schwingungen versetzt, wodurch eine größere Stoffaustauschfläche bei einem engeren Tropfenspektrum geschaffen wird. Auf diese Weise kann der Wirkungsgrad noch weiter verbessert werden. Eigentlich hätte man erwarten müssen, daß der Effekt der Randabdichtung bei pulsierendem Betrieb von untergeordneter Bedeutung ist. Überraschenderweise hat sich jedoch herausgestellt, daß die Randabdichtung im pulsierenden Betrieb zu einer erheblichen Wirkungsgradsteigerung führt.

Der größte Fortschritt hinsichtlich Trennwirksamkeit und Spielraum bei der Festlegung des Betriebsbereiches für den flächenspezifischen Durchsatz der beiden Phasen wird durch die Kombination der drei Maßnahmen a) bis c) erreicht:

a) Verwendung einer engkanaligen Packung mit großer spezifischer Oberfläche (größer 300 m²/m³ Packungsvolumen)
b) Rückführung der beiden Phasen zur Kolonnenmitte infolge der Randabdichtung und
c) pulsierender Betrieb.

Insgesamt konnte eine Verdoppelung des Wirkungsgrades bei einer gleichzeitigen Verbesserung des Spielraumes hinsichtlich der Festlegung des Durchsatzes der beiden Phasen erzielt werden.

Die höchst zulässige flächenspezifische Belastung innerhalb des Spielraumes für die Wahl des Betriebspunktes entspricht definitionsgemäß der Flutgrenze. Sie wird nachfolgend als "Flutbelastung" (B$_{FL}$) bezeichnet. Als charakteristische Größe für die Trennleistung verwendet man die Zahl der erreichbaren theoretischen Stufen pro Meter Kolonnenhöhe bzw. deren Kehrwert; d. i. die Höhe einer theoretischen Stufe, die üblicherweise mit HETS bezeichnet wird.

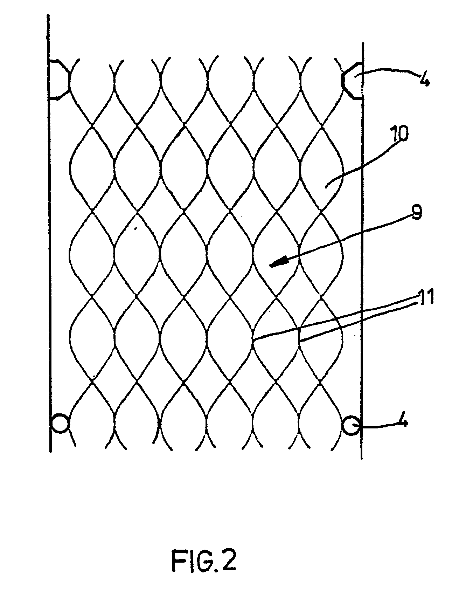

Die Randabdichtung führt im Prinzip bei allen in Flüssig-Flüssig-Extraktionskolonnen einsetzbaren geordneten Packungen zu einer Verbesserung der Trennwirksamkeit. Der Effekt ist dann allerdings nicht so stark ausgeprägt wie unter den oben beschriebenen Voraussetzungen. So zeigt Figur 2 als weiteres Ausführungsbeispiel einen Ausschnitt aus einer Extraktionskolonne mit einer Packung 9, die aus einer Vielzahl regulär angeordneter achsenparalleler Wendeln 10 besteht. Die Wendeln 10 werden durch Verdrillung von Blech- oder Kunststoffstreifen hergestellt. Sie sind in der Packung so angeordnet, daß sie untereinander eine Vielzahl von Berührungspunkten 11 aufweisen. Am oberen Ende ist eine aus einem federnden Schlauch bestehende Randabdichtung 4 mit segmentförmigem Querschnitt und am unteren Ende mit kreisförmigem Querschnitt angedeutet. Die Form der Randabdichtung ist im allgemeinen nicht kritisch. Entscheidend ist nur, daß Randströmungen durch das ringsherum abschließende Dichtelement unterbunden werden.

Vergleichsbeispiele

Beispiel 1:

Mit dem normierten Testgemisch Wasser-Aceton-Toluol wurde in einer mit einer Mellapak 500 Y der Firma Sulzer gefüllten Extraktionskolonne DN 100, Füllhöhe 3780 mm ohne Randabdichtung und ohne Pulsation ein mittlerer Wirkungsgrad HETS = 0,55 m erzielt. Das Phasenverhältnis der dispersen und kontinuierlichen Phase war dabei mit

$$\frac{\dot{V}_d}{\dot{V}_c} = 1{,}5:1 \quad \text{Volumenteile}$$

vorgegeben. Die Flutbelastung wurde bei B$_{FL}$=82 m³/m² h gemessen.

Beispiel 2:

Mit dem gleichen Testgemisch und unter Verwendung der in Beispiel 1 beschriebenen Kolonne wurde mit Pulsation bei einem Produkt aus Amplitude und Frequenz von 1000 mm/min wiederum ohne Randabdichtung ein mittlerer HETS-Wert von 0,4 m gemessen. Die Flutbelastung B$_{FL}$ betrug bei dem gleichen Zulaufverhältnis B$_{FL}$ = 67,5 m³/m² h.

Beispiel 3:

Unter Verwendung des gleichen Testsystems und derselben Apparatur wie in den vorhergehenden Beispielen wurde bei gleicher Pulsationsintensität unter Verwendung einer Randabdichtung ein mittlerer HETS-Wert von 0,3 m erzielt. Die Flutbelastung lag wie oben bei B$_{FL}$ = 67,5 m³/m² h.

Jede im Zusammenhang mit den vorhergehenden Beispielen gewonnene Meßreihe bestand aus mindestens vier, im Regelfall sechs reproduzierbaren Einzelmessungen über den gesamten Belastungsspielraum.

Beispiel 4 u. 5:

Ergänzend wurden mit dem Testsystem Wasser-Aceton-n-Butylacetat analoge Messungen zu den obigen Beispielen durchgeführt. Unter den im Beispiel 1 genannten Bedingungen und bei einem Zulaufverhältnis $V_d/V_c$ = 1 : 1 Volumenteile wurde als Ergebnis ein mittlerer HETS-Wert von 0,7 m erzielt. Die Flutbelastung betrug $B_{FL}$ = 86 m³/m² h. Unter den im Beispiel 3 genannten Bedingungen ergab sich ein mittlerer HETS-Wert von 0, 33 m bei einer Flutbelastung von $B_{FL}$ = 57 m³/m² h.

## Patentansprüche

1. Verfahren zur Flüssig-Flussig-Extraktion unter Verwendung einer Stoffaustausch-Kolonne mit einer geordneten Packung auf der Basis einer Vielzahl parallel zur Kolonnenachse geschichteter, sich untereinander punktweise berührender Lagen, die im Gegenstrom von jeweils mindestens einer kontinuierlichen und einer dispersen Phase durchströmt werden,dadurch gekennzeichnet, daß eine Packung verwendet wird, deren Lagen eine spezifische Oberfläche von mindestens 300 m²/m³ Packungsvolumen, vorzugsweise 500 m²/m³, aufweisen und die beiden Phasenströme durch eine, aus einem von der dispersen Phase nicht benetzbaren, elastischen Material bestehende, in Form eines Schlauches um die Packung gelegte und an der Kolonneninnenwand anliegende Randabdichtung in regelmäßigen Abständen in die Packung zurückgeführt werden.

2. Verfahren nach Anspruch 1,dadurch gekennzeichnet, daß den beiden Phasenströmen durch einen am unteren Ende der Kolonne angebrachten Pulsator eine pulsierende Bewegung überlagert wird.

3. Verfahren nach Anspruch 1 bis 2,dadurch gekennzeichnet, daß durch übereinander,jeweils um 90° gegeneinander versetzt in der Kolonne angeordnete Packungen eine hohe Quervermischung der beiden Phasen erzeugt wird.

4. Verfahren nach Anspruch 1 bis 3,dadurch gekennzeichnet, daß als Elemente für die Lagen geriffelte und gelochte Bleche verwendet werden, wobei die Riffelungen benachbarter Lagen sich kreuzen.

5. Verfahren nach Anspruch 1 bis 4,dadurch gekennzeichnet, daß im Falle einer organischen dispersen Phase ein elastischer Metallschlauch zur Randabdichtung verwendet wird.

6. Verfahren nach Anspruch 1 bis 4,dadurch gekennzeichnet, daß im Falle einer wässrigen dispersen Phase ein elastischer Kunststoffschlauch zur Randabdichtung verwendet wird.

## Claims

1. Process for solvent-solvent extraction using a mass transfer column having ordered packing based on a number of layers in column axis, at least one continuous phase and one disperse phase flowing through each of these layers in counter-current, characterised in that the layers of the packing used have a specific surface area of at least 300 m²/m³ packing volume, preferably 500 m²/m³, and the two phase currents are fed back to the packing by means of edge packing resting at regular distances on the inner wall of the column and laid around the packing in the form of a tube consisting of a resilient material which cannot be moistened by the disperse phase.

2. Process according to claim 1, characterized in that a pulsing device attached to the lower end of the column imposes a pulsing movement on the two phase currents.

3. Process according to claim 1 to 2, characterised in that packings arranged one above another in the column, each offset by 90° to one another, produce a high degree of cross mixing of the two phases.

4. Process according to claim 1 to 3, characterised in that corrugated and perforated sheets are used as elements for the layers, wherein the corrugations of neighbouring layers cross one another.

5. Process according to claim 1 to 4, characterised in that a resilient metal tube is used for edge packing in the case of an organic disperse phase.

6. Process according to claim 1 to 4, characterised in that a resilient plastic tube is used for edge packing in the case of an aqueous disperse phase.

## Revendications

1. Procédé d'extraction liquide-liquide utilisant une colonne d'échange de matière comportant une garniture ordonnée sur la base d'une multiplicité de couches en contact ponctuel les unes avec les autres, stratifiées parallèlement à l'axe de la colonne, qui sont traversées à contre-courant par au moins une phase continue et au moins une phase dispersée, caractérisé en ce qu'on utilise une garniture dont les couches présentent une surface spécifique d'au moins 300 m² par m³ de volume de garniture, de préférence 500 m²/m³, et les deux courants de phases sont recyclés dans la garniture à intervalles réguliers à travers un joint marginal en matière élastique non mouillable par la phase dispersée, sous forme d'un tuyau disposé autour de la garniture et s'appliquant contre la paroi intérieure de la colonne.

2. Procédé suivant la revendication 1, caractérisé en ce qu'un mouvement de pulsation est superposé aux deux courants de phase par un générateur de pulsations disposé à l'extrémité inférieure de la colonne.

3. Procédé suivant les revendications 1 et 2, caractérisé en ce qu'un fort brassage transversal des deux phases est produit par des garnitures superposées dans la colonne, décalées les unes des autres de 90°.

4. Procédé suivant les revendications 1 à 3, caractérisé en ce qu'on utilise comme éléments pour les couches des tôles cannelées et perforées avec disposition en croix des cannelures de couches voisines.

5. Procédé suivant les revendications 1 à 4, caractérisé en ce qu'on utilise, dans le cas d'une phase organique dispersée, un tuyau élastique en métal pour former le joint marginal.

6. Procédé suivant les revendications 1 à 4, caractérisé en ce qu'on utilise, dans le cas d'une phase aqueuse dispersée, un tuyau élastique en matière plastique pour former le joint marginal.

FIG.1

FIG.2